# EUROPEAN PATENT APPLICATION

(11) **EP 3 477 565 A1**
(43) Date of publication of application: **01.05.2019**
(21) Application number: 18810494.7
(22) Date of filing: 11.05.2018
(51) Int. Cl.: G06Q 10/08

(54) **INVENTORY CONTROL AND ORDERING DEVICE, INVENTORY CONTROL AND ORDERING METHOD, AND COMPUTER PROGRAM**

(30) Priority: 31.05.2017 JP 2017107500
(71) Applicant: Vendor Service Co., Ltd., Tokyo 105-0001 (JP)
(72) Inventor: EGAWA, Takeshi, Tokyo 105-0001 (JP)
(74) Representative: Gill Jennings & Every LLP
(86) International application number: PCT/JP2018/018335
(87) International publication number: WO 2018/221164

(57) **Abstract**

To properly manage the amount of distribution in the distribution process of raw materials.

An inventory management and ordering apparatus stores past demand information on an article sold at a retail store, history information on order placement to a raw material manufacturer and history information on entry to a company's warehouse, history information on order receipt of a raw material and supply history information, expiration date information on entry calculated by a best-before expiration date or a use-by expiration date and a number of days until the expiration date, expiration date information on delivery, information on an in-house inventory quantity of the raw material, recipe information of the article, and number-of-days management rule information indicating a management rule of a usage expiration date of the raw material of the article manufacturer, predicts a future demand of the article and theoretical inventory for each raw material of the article manufacturer and calculates a necessary inventory quantity of the raw material in the company's warehouse from the theoretical inventory and determines a holding quantity for each raw material at the company's warehouse, and calculates an order quantity necessary for securing the determined holding quantity.

## Description

### {Technical Field}

The present invention relates to an inventory management and ordering apparatus, an inventory management and ordering method, and a computer program.

### {Background Art}

Raw materials of food, for example, rice balls and sandwiches sold at retail stores are supplied from a company selling raw materials such as food materials and packages or the like to a company manufacturing food in a state of an article via a wholesale company.

The wholesale company deals with a large number of nationwide raw material manufacturers and food manufacturers, and has a plurality of company's warehouses nationwide. The wholesale company place an order for raw materials to the raw material manufacturers, transports the raw materials between the company's warehouses as necessary, and wholesales the raw materials to the food manufacturers. The types of raw materials handled by the wholesale company are huge, and a number of food raw materials with best-before expiration date or use-by expiration date that comes shortly are included. In addition, since articles handled at the retail stores are frequently switched, for example, in season or the like, the quantity and types of raw materials handled by the wholesale company are also frequently changed.

Therefore, it is required that the wholesale company order an appropriate amount of raw materials to the large number of nationwide raw material manufacturers such that the wholesale company can feed the raw materials at an appropriate timing in accordance with orders from the large number of nationwide food manufacturers, while managing the best-before expiration date and use-by expiration date of each food raw material, and secure the raw materials for feeding to the food manufacturers.

As an example of such an inventory management technique, there is known a technique capable of theoretically managing the usage expiration date of stored articles to accurately discover a mistake in rotation (see, for example, Patent Literature 1).

### {Citation List}

### {Patent Literature}

{PTL 1} Japanese Patent Application Laid-Open No. 2001-287811

### {Summary of Invention}

### {Technical Problem}

According to the technique disclosed in the above-described patent literature 1, although it is possible to issue an inventory having an old usage expiration date among inventories, it is intended to increase the efficiency of inventory management at the company itself, and thus it is difficult to manage the amount of distribution taking into account inventories of raw material manufacturers, food manufacturers, and the like other than in-house inventory, or the usage expiration date or the like of food raw materials in the distribution process.

It is therefore an object of the present invention to provide an inventory management and ordering apparatus, an inventory management and ordering method, and a computer program capable of appropriately managing the amount of distribution in the distribution process of raw materials.

### {Solution to Problem}

In order to solve the above problem, a first aspect of the inventory management and ordering apparatus of the present invention includes: information storage means that stores past demand information on an article sold at a retail store, history information on order placement to a raw material manufacturer selling a raw material for manufacturing the article and history information on entry to a company's warehouse, history information on order receipt of the raw material from an article manufacturer manufacturing the article and supply history information, expiration date information on entry to the company's warehouse calculated by a best-before expiration date or a use-by expiration date of the raw material and a number of days until the expiration date, expiration date information on delivery to the article manufacturer, information on an in-house inventory quantity of the raw material, recipe information of article, and number-of-days management rule information indicating a management rule of a usage expiration date of the raw material at the article manufacturer; prediction calculation means that, based on the information stored in the information storage means, predicts a future demand of the article and theoretical inventory for each raw material of the article manufacturer, and calculates a necessary inventory quantity of the raw material in the company's warehouse from the theoretical inventory; and order quantity calculation means that, based on the necessary inventory quantity of the raw material, determines a holding quantity for each raw material at the company's warehouse, and calculates an order quantity necessary for securing the determined holding quantity.

In another aspect of the inventory management and ordering apparatus of the present invention, the information storage means further stores calculation result by the prediction calculation means and the order quantity calculation means, and the inventory management and ordering apparatus includes prediction accuracy verification means that verifies prediction accuracy by comparing the calculation result with an actual inventory quantity at the article manufacturer or the optimum value input by a user.

Another aspect of the inventory management and ordering apparatus of the present invention includes related information extraction means that, based on information on an unprocessed raw material constituting the raw material and the article recipe information, extracts any of a related article, the raw material manufacturer, the article manufacturer, or the retail store.

Another aspect of the inventory management and ordering apparatus of the present invention includes: display control means that controls display of information on a display unit; and simulation calculation means that receives designation of replacement of the raw material ordered to the raw material manufacturer with another raw material, controls, by the prediction calculation means, the calculation of the future demand prediction of the article corresponding to the other raw material, the theoretical inventory of the raw material manufacturer, the theoretical inventory of the article manufacturer, and the necessary inventory prediction of the raw material in the company's warehouse, controls, by the order quantity calculation means, the calculation of the holding quantity for each raw material at the company's warehouse corresponding to the other raw material and the order quantity, and outputs a prediction result and a calculation result corresponding to the other raw material to the display control means to display the results on the display unit.

Furthermore, one aspect of the inventory management and ordering method of the present invention is an inventory management and ordering method executed by an inventory management and ordering apparatus including information storage means; prediction calculation means; and order quantity calculation means, the method including: an information storing step in which the information storage means stores past demand information on an article sold at a retail store, history information on order placement to a raw material manufacturer selling a raw material for manufacturing the article and history information on entry to a company's warehouse, history information on order receipt of the raw material from an article manufacturer manufacturing the article and supply history information, expiration date information on entry to the company's warehouse calculated by a best-before expiration date or a use-by expiration date of the raw material and a number of days until the expiration date, expiration date information on delivery to the article manufacturer, information on an in-house inventory quantity of the raw material, recipe information of the article, and number-of-days management rule information indicating a management rule of a usage expiration date of the raw material at the article manufacturer; a prediction calculation step in which, based on the information stored in the information storage means, the prediction calculation means predicts a future demand of the article and theoretical inventory for each raw material of the article manufacturer, and calculates a necessary quantity of the raw material in the company's warehouse from the theoretical inventory; and an order quantity calculation step in which, based on the necessary inventory quantity of the raw material in the company's warehouse predicted by the process of the prediction calculation means, the order quantity calculation means determines a holding quantity for each raw material at the company's warehouse, and calculates an order quantity necessary for securing the determined holding quantity.

Furthermore, one aspect of the computer program of the present invention is a computer program for causing a computer to function as an inventory management and ordering apparatus that executes management of an inventory in a company's warehouse and order placement operation, in a case of supplying a raw material ordered to a raw material manufacturer to an article manufacturer manufacturing an article sold at a retail store, the computer program being for causing the apparatus to function as: information storage means that stores past demand information on an article sold at a retail store, history information on order placement to a raw material manufacturer selling a raw material for manufacturing the article and history information on entry to a company's warehouse, history information on order receipt of the raw material from an article manufacturer manufacturing the article and supply history information, expiration date information on entry to the company's warehouse calculated by a best-before expiration date or a use-by expiration date of the raw material and a number of daya until the expiration date, expiration date information on delivery to the article manufacturer, information on an in-house inventory quantity of the raw material, recipe information of the article, and number-of-days management rule information indicating a management rule of a usage expiration date of the raw material at the article manufacturer; prediction calculation means that, based on the information stored in the information storage means, predicts a future demand of the article and theoretical inventory for each raw material of the article manufacturer, and calculates a necessary quantity of the raw material in the company's warehouse from the theoretical inventory; and order quantity calculation means that, based on the necessary inventory quantity of the raw material in the company's warehouse predicted by the process of the prediction calculation means, determines a holding quantity for each raw material at the company's warehouse, and calculates an order quantity necessary for securing the determined holding quantity.

### {Advantageous Effects of Invention}

According to the present invention, it is possible to properly manage the amount of distribution in the distribution process of raw materials.

### {Brief Description of Drawings}

Fig. 1 is a diagram for describing an overview of a distinctive portion of an embodiment of the present invention.
Fig. 2 is a diagram for describing a system according to one embodiment that specifically implements a structure illustrated in Fig. 1.
Fig. 3 is a diagram for describing each device that implements each function of the system described in Fig. 2.
Fig. 4 is an example of a screen displaying raw material information acquired from a raw material manufacturer on a display on the information management server side.
Fig. 5 is an example of a screen displaying article recipe information acquired from a food manufacturer on a display on the information management server side.
Fig. 6 is a block diagram illustrating functions of an information management server.
Fig. 7 is a diagram for describing information stored in an information storage unit.
Fig. 8 is a diagram for describing an example of number-of-days management rule information.
Fig. 9 is a diagram for describing in-house entry/exit information.
Fig. 10 is a diagram illustrating an example of an item of a data table necessary for predicting theoretical inventory of a food manufacturer.
Fig. 11 is an example of a display screen generated by a display information generating unit.
Fig. 12 is a flowchart illustrating order quantity calculation process executed by an information management server.
Fig. 13 is a flowchart illustrating the details of process of calculating the theoretical inventory quantity.
Fig. 14 is a flowchart illustrating prediction-accuracy verification process.
Fig. 15 is a flowchart illustrating an example of traceability-based tracking process.
Fig. 16 is an example of a display screen displayed by the information management server.
Fig. 17 is a flowchart illustrating an example of simulation process.
Fig. 18A is a part of an example of display screen data generated by a display information generating unit 67.
Fig. 18B is an example of display screen data generated by the display information generating unit 67, and is an example of data displayed on the same screen as the display screen data in Fig. 18A.
Fig. 18C is an example of display screen data generated by the display information generating unit 67, and is an example of data displayed on the same screen as the display screen data in Figs. 18A and 18B.
Fig. 19 is an example of a retrieval screen displayed when simulating replacement of raw materials.
Fig. 20 is an example of a retrieval screen displayed when simulating the replacement of the raw materials.
Fig. 21 is an example of a retrieval screen displayed when simulating the replacement of the raw materials.
Fig. 22 is an example of a retrieval screen displayed when simulating the replacement of the raw materials.
Fig. 23 is a diagram illustrating an example of an item of a data table necessary for predicting the theoretical inventory of a raw material manufacturer.
Fig. 24 is a flowchart illustrating a method of calculating the theoretical inventory quantity of the raw material manufacturer.

### {Description of Embodiments}

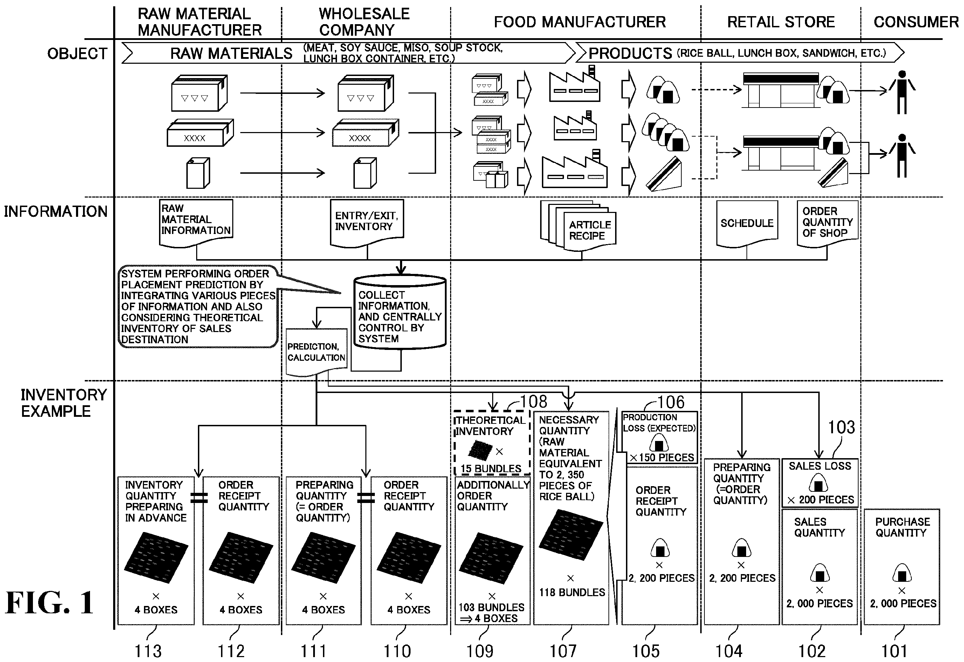

Hereinafter, an inventory management and ordering system according to an embodiment of the present invention will be described with reference to Figs. 1 to 24. Note that the present invention is not limited to the embodiment described below.

### (Overview Description of Distinctive Portion of Embodiment of Present Invention)

Fig. 1 is a diagram for describing an overview of a distinctive portion of an embodiment of the present invention. As illustrated in Fig. 1, a consumer can purchase an article (e.g. rice ball, lunch box, sandwich, and the like) at a retail store. The retail store orders the articles to a food manufacturer, based on prediction of product sales and sales loss. On the other hand, the food manufacturer receives the article order from the retail store, and orders raw materials necessary for manufacturing the articles, to a wholesale company. Even in a case of manufacturing an article, for example, a rice ball handled by such a wholesale company, a huge variety of raw materials such as rice, seasoning, ingredients, films, seals is used. In addition, in accordance with replacement of sale articles at the retail store, replacement of the raw materials occurs. Furthermore, the raw materials have best-before expiration date or use-by expiration date as well. That is, the wholesale company is required to manage the best-before expiration date or use-by expiration date of each of a number of raw materials, and to prepare the necessary quantity of the raw materials at the optimum timings.

Therefore, the wholesale company in the present invention theoretically manages the inventory on the food manufacturer side and performs inventory management and order placement process in consideration of inventory status other than the wholesale company in a series of distribution process. Here, the theoretical inventory at the food manufacturer is an inventory quantity calculated from the difference between the actual number of delivery in the past to the food manufacturer and the theoretical number of usage. Considering a numerical value calculated by the theoretical inventory and a predicted demand at the retail store, the quantity of the raw materials actually ordered from the food manufacturer side is predicted and the order quantity to the raw material manufacturer is determined.

For example, as illustrated in the inventory example of Fig. 1, in a case where it is predicted that a consumer purchases 2000 rice balls at a retail store in a predetermined period of time (blocks 101, 102), and at the retail store, it is predicted that sales loss of 200 pieces occurs due to expiration of the best-before expiration date within the predetermined period of time (block 103) or the like, the actual quantity order that is to be ordered from the retail store to the food manufacturer is 2200 pieces (block 104). In addition, in a case where it is predicted that, for raw materials necessary for making 2200 rice balls ordered by the food manufacturer (block 105), production loss of 150 pieces occurs (block 106), the raw materials are necessary for 2350 pieces (sum of blocks 105 and 106). For example, the necessary amount of seaweed at the time is defined as 118 bundles (block 107). Meanwhile, it is assumed that the food manufacturer possesses unused portions of the raw materials delivered from wholesale company in the past. This is the theoretical inventory, which is assumed as 15 bundles here (block 108). In this case, the raw material that is to be actually ordered to the wholesale company is the quantity (118 bundles - 15 bundles = 103 bundles) (block 109) obtained by subtracting the quantity of the raw material (15 bundles) grasped as the theoretical inventory. The wholesale company receives a order of the raw material equivalent to the actual quantity (one box containing 30 bundles, and 4 boxes for 103 bundles if necessary) (block 110) from the food manufacture and needs to deliver the raw material to the food manufacture, therefore, the wholesale company orders, to the raw material manufacturer, the raw material equivalent to the quantity (4 boxes) actually ordered from the food manufacturer (block 111). In the raw material manufacturer, it is desirable to prepare the raw material equivalent to the quantity (4 boxes) which will be ordered from the wholesale company (block 112) as inventory in advance (block 113).

Furthermore, the wholesale company according to the present invention centrally manages demand information at retail stores, schedule information on article replacement, article recipe information at food manufacturers, entry/exit quantity and inventory quantity of raw materials at the wholesale company, and raw material information on raw material manufacturers, and the like. Thus, it is possible to secure traceability in addition to streamlining inventory of raw materials in a series of distribution processes. Hereinafter, a specific system configuration for realizing such a structure will be described.

### (Description of System)

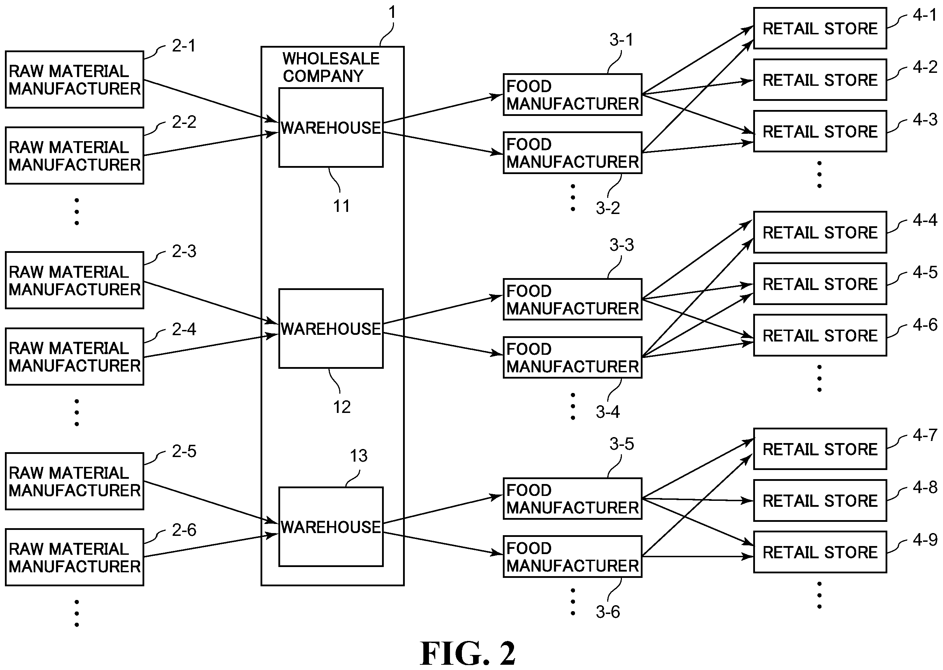

Fig. 2 is a diagram for describing a system according to an embodiment that specifically realizes a structure illustrated in Fig. 1. Note that the number of raw material manufacturers 2-1 to 2-6 (hereinafter referred to as raw material manufacturer 2), food manufacturers 3-1 to 3-6 (hereinafter referred to as food manufacturers 3), retail stores 4 -1 to 4-9 (hereinafter referred to as retail store 4), warehouses 11, 12, and 13 of a wholesale company 1 illustrated in Fig. 2 is merely an example, and this is not limitative.

The wholesale company 1 is a company that procures raw materials from the raw material manufacturer 2 and delivers the raw materials to the food manufacturer 3. The wholesale company 1 has the warehouses 11, 12, and 13 at a plurality of nationwide bases, and can deliver the raw materials delivered from the raw material manufacturer 2, to the food manufacturer 3. Note that the raw materials are preferably managed by an article name or a code commonly used by the wholesale company 1, the raw material manufacturer 2 and the food manufacturer 3 described later.

The raw material manufacturer 2 is a company that provides the raw materials to wholesale company 1. The raw material manufacturer 2 manufactures raw materials, for example, food materials, packaging containers, packages, and the like necessary for the food manufacturer 3 to manufacture articles such as lunch boxes, rice balls, or sandwiches, receives an order from the wholesale company 1, and supplies the raw materials to the warehouses 11, 12, and 13 of the wholesale company 1.

The food manufacturer 3 is a company that purchases the raw materials from the wholesale company 1 to manufacture foods, and provides the manufactured foods to the retail store 4, for example, convenience stores, supermarkets, and the like.

The retail store 4 is a shop that sells the supplied articles such as lunch boxes, rice balls, or sandwiches to consumers.

### (Server Implementing Each Function of System)

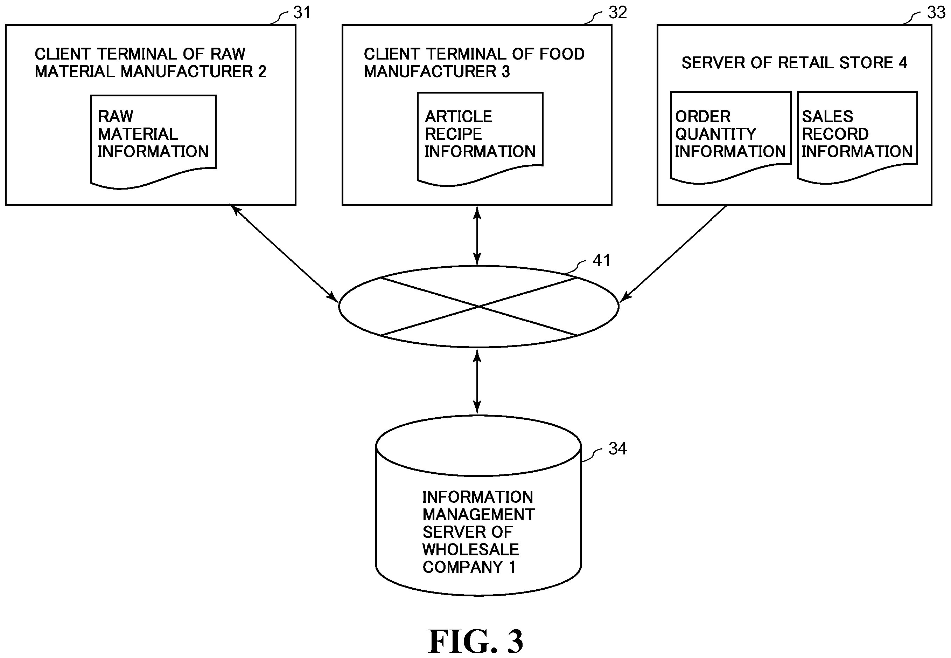

Fig. 3 is a diagram for describing each device that implements each function of the system described in Fig. 2. As illustrated in Fig. 3, the system described in Fig. 2 has a client terminal 31 of the raw material manufacturer 2, a client terminal 32 of the food manufacturer 3, a server 33 of the retail store 4, and an information management server 34, and configured to allow the servers to communicate with each other via a predetermined network 41 such as the Internet or a dedicated line. However, in this system, it is unnecessary to construct all information to be communicable. For example, a piece of the information held by each server may be acquired by another communication means such as a FAX, and may be input by an operator on the information management server 34 side. Note that the client terminal 31 of the raw material manufacturer 2, the client terminal 32 of the food manufacturer 3, the server 33 of the retail store 4, and the information management server 34 are so-called computers, and are apparatuses having a hardware configuration including, for example, a central processing unit (CPU), a random access memory (RAM), a read only memory (ROM), a hard disk drive (HDD), a communication interface, a display, or the like. In addition, in each device, the CPU reads a computer program installed in the ROM, the HDD, and the like, into the RAM, and executes the computer program, so that the individual functions described later can be implemented. Note that, regarding the hardware configuration of the device, the hardware configuration of the device is not limited to the above-described configuration, and design change can be made as appropriate. Furthermore, the client terminal 31 and the client terminal 32 in this system are not necessarily the computers each owned by the raw material manufacturer 2 and the food manufacturer 3. For example, a device owned by the wholesale company 1 may be lent to the raw material manufacturer 2 and the food manufacturer 3 so as to function as the client terminal 31 and the client terminal 32.

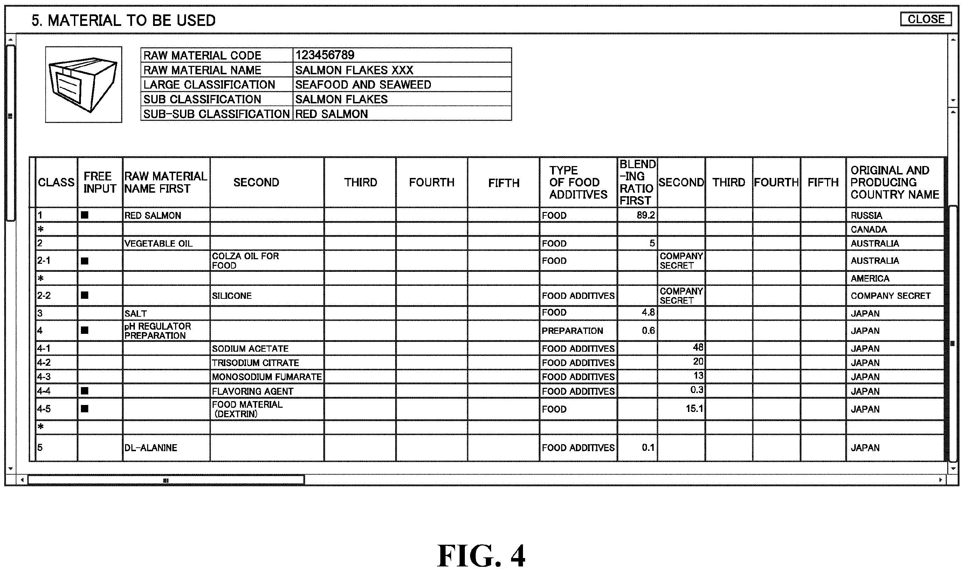

The client terminal 31 of the raw material manufacturer 2 is a computer possessed by or used by the raw material manufacturer 2, and is a device that can access the information management server 34. A person in charge of the raw material manufacturer 2 can access the information management server 34 by operating the client terminal 31 to input raw material information on a raw material that is to be supplied to the wholesale company 1 or upload a file in which the raw material information is recorded. As a result, the information management server 34 can acquire the raw material information before starting a transaction with the wholesale company 1. Fig. 4 is an example of a screen displaying the raw material information acquired from the raw material manufacturer 2 on a display on the information management server 34 side. For example, when retrieving information on salmon flakes XXX that is one of raw materials of "rice ball (salmon)", a material for manufacturing the salmon flakes XXX (hereinafter referred to as unprocessed raw material) is also displayed. Examples of the unprocessed raw materials of the salmon flakes XXX include red salmon, vegetable oil, salt, PH conditioner, DL-alanine, and the like, and information indicating the unprocessed raw materials, blending ratio information on each unprocessed raw material, production place information on each unprocessed raw material, information on producing country and processing country of each unprocessed raw material, information on date of manufacture of each unprocessed material, and the like are displayed.

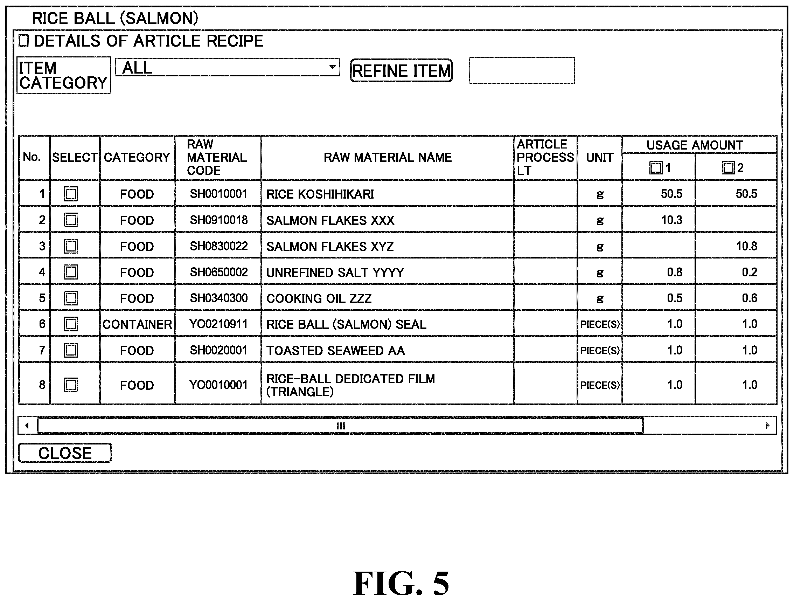

The client terminal 32 of the food manufacturer 3 is a computer possessed or used by the food manufacturer 3, and is a device can access the information management server 34. A person in charge of the food manufacturer 3 can access the information management server 34 by operating the client terminal 32 to input article recipe information or upload a file in which the recipe information on the article is recorded. Note that, since there is a case that the data format of the article recipe information may be different for individual food manufacturer 3, the information management server 34 acquires necessary article recipe information for individual food manufacturer 3. Fig. 5 is an example of a screen displaying the article recipe information acquired from the food manufacturer 3 on the display on the information management server 34 side. Examples of rice ball (salmon) raw materials include rice, salmon flakes, salt, rice cooking oil, seals, seaweed, and films. Note that on the display of the information management server 34, codes indicating the raw materials, information indicating the blending amount of each raw material, and the like are displayed. In addition, as the raw materials, not only food materials, but also seals, films, and the like for packaging foods are stored. Furthermore, when "rice ball (salmon)" is ordered from the retail store 4, it is also possible to display the raw materials for manufacturing the "rice ball (salmon)" at the same time.

The server 33 of the retail store stores order quantity information to the food manufacturer 3 from the retail store 4, sales record information, and the like. For the order quantity information and the sales record information, information such as the order quantity and the sales records for each date or for each predetermined time obtained by further dividing one day are recorded.

The information management server 34 is an example of the inventory management and ordering apparatus of the claims, and is an apparatus capable of centrally managing the information stored in each server. Therefore, the information management server 34 is an apparatus capable of performing a inventory management of raw materials, securing traceability of articles and raw materials, simulating of demand prediction of articles, fluctuation prediction of the necessary number of raw materials due to replacement or change of articles.

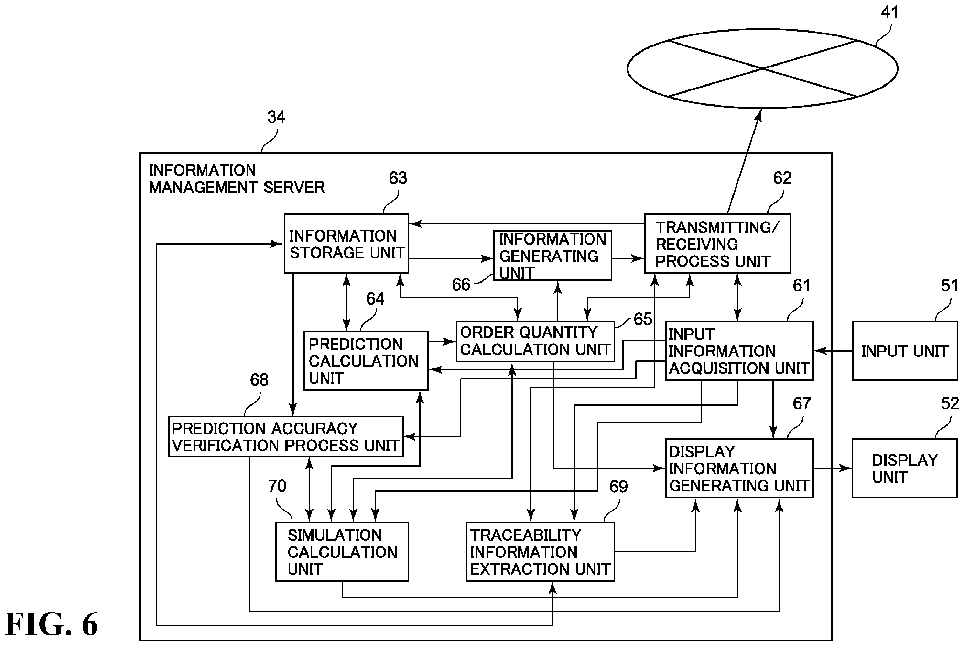

Fig. 6 is a block diagram illustrating the functions of the information management server 34. The information management server 34 consists of and includes functions of an input information acquisition unit 61, a transmitting/receiving process unit 62, an information storage unit 63 (an example of information storage means), a prediction calculation unit 64 (an example of prediction calculation means), an order quantity calculation unit 65 (an example of order quantity calculation means), an information generating unit 66, a display information generating unit 67 (an example of display control means), a prediction accuracy verification process unit 68 (an example of prediction accuracy verification means), a traceability information extraction unit 69 (an example of related information extraction means), and a simulation calculation unit 70 (an example of simulation calculation means).

The input information acquisition unit 61 receives information indicating a user's operation input from an input unit 51, feeds the information to the corresponding units, and causes the corresponding units to execute predetermined process.

The transmitting/receiving process unit 62 exchanges the information with the client terminal 31 of the raw material manufacturer, the client terminal 32 of the food manufacturer, and the server 33 of the retail store via the network 41, which are described with reference to Fig. 3.

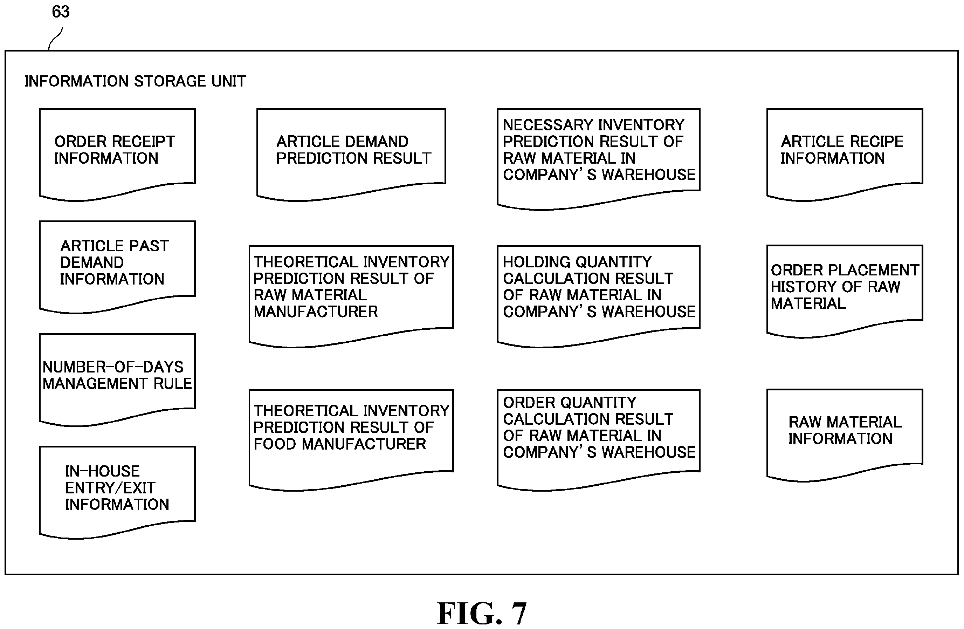

The information storage unit 63 stores various types of information. Fig. 7 is a diagram for describing the information stored in the information storage unit 63. In the information storage unit 63, for example, as the pieces of information illustrated in Fig. 7, there are stored order receipt information that is a history orders received from the food manufacturer 3 in the past, past demand information on articles, number-of-days management rule information, in-house entry/exit information, demand prediction result of the articles, information on the theoretical inventory prediction result of the raw material manufacturer 2, information on the theoretical inventory prediction result of the food manufacturer 3, information on the necessary inventory prediction result of raw materials in the company's warehouse, holding quantity calculation result information on the raw materials in the company's warehouse, order quantity calculation result information on the raw materials in the company's warehouse, article recipe information, history information on order placement of raw materials, raw material information, and the like.

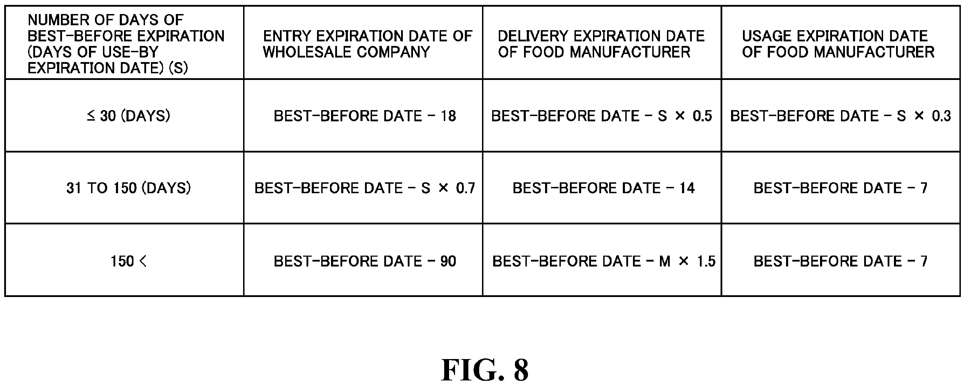

Fig. 8 is a diagram for describing an example of the number-of-days management rule information. As illustrated in Fig. 8, for example, the information storage unit 63 stores, for each raw material, the number-of-days management rule information indicating a rule of managing entry expiration date to the wholesale company, delivery expiration date to the food manufacturer 3, and usage expiration date at the food manufacturer 3 that are calculated based on the days between the best-before expiration date or the use-by expiration date and the days up to the expiration date. In Fig. 8, M represents one month and S represents the days of best-before expiration. Note that, in a case of raw materials (for example, containers) that do not require management of the best-before expiration date or the use-by expiration date, it is also possible to set that various types of expiration are excluded from items that is to be managed.

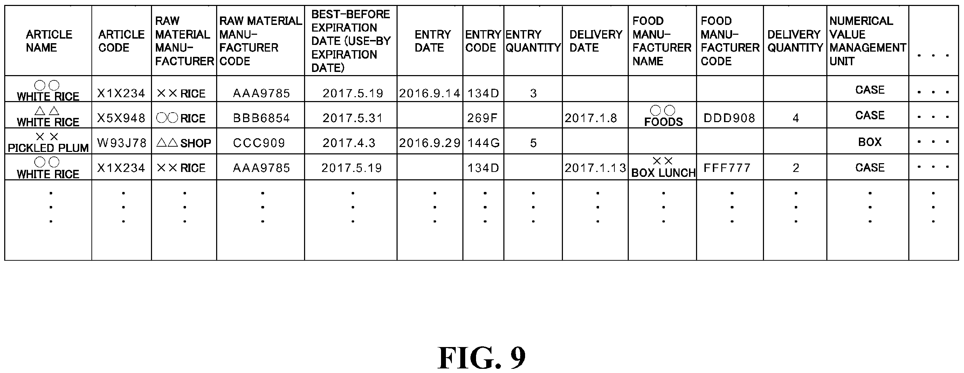

Furthermore, the information storage unit 63 stores in-house entry/exit information. Fig. 9 is a diagram for describing the in-house entry/exit information. The in-house entry/exit information is, for example, such as illustrated in Fig. 9, a history of entry to the company's warehouse from the raw material manufacturer 2 and exit from the company's warehouse to the food manufacturer 3 for the raw materials and each best-before expiration date (or use-by expiration date) of each raw material.

Furthermore, the information storage unit 63 stores, for example, the demand prediction result of the article, the theoretical inventory prediction result of the raw material manufacturer 2, the theoretical inventory prediction result of the food manufacturer 3, and the necessary inventory prediction result of the raw materials in the company's warehouse, and the like, which are predicted by the process of the prediction calculation unit 64 described later, and stores the holding quantity calculation result of the raw materials in the company's warehouse, the order quantity calculation result of the raw materials in the company's warehouse, and the like that are calculated by process of the order quantity calculation unit 65 described later.

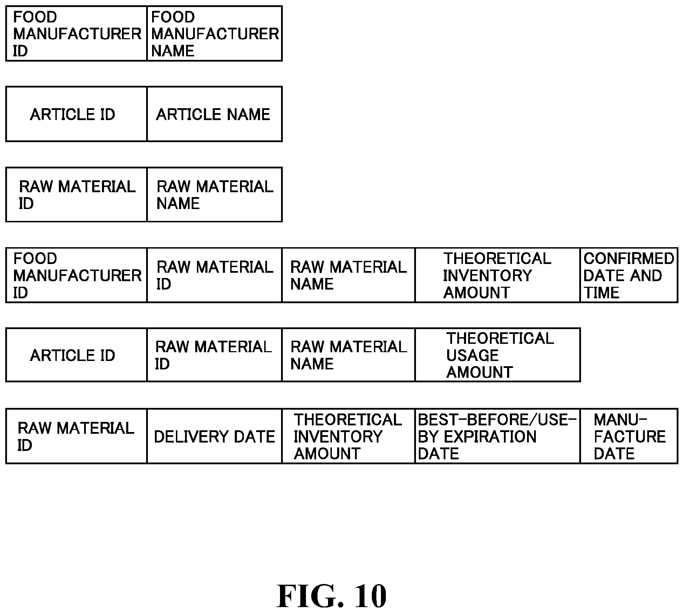

Fig. 10 is a diagram illustrating an example of items of a data table necessary for predicting theoretical inventory of a food manufacturer. For example, as illustrated in Fig. 10, in the theoretical inventory prediction of the food manufacturer 3, when a food manufacturer ID and a raw material ID are designated, the theoretical inventory amount of the raw material possessed by the food manufacturer can be grasped. Furthermore, the usage prediction amount (theoretical usage amount) of the raw material of the article is obtained from information on the article (article ID) ordered from the retail store. Therefore, by subtracting the theoretical usage amount from the theoretical inventory amount of the raw material, the theoretical inventory amount before and after manufacturing the food can be grasped.

The prediction calculation unit 64 automatically derives the necessary amount of the raw material from the demand prediction of the article. Specifically, the prediction calculation unit 64 refers to the past demand information on the article stored in the information storage unit 63, and calculates the future demand prediction of the article, based on the sales record of the article at the retail store 4 or the history of the ordering of the article from the retail store 4 to the food manufacturer 3. Furthermore, the prediction calculation unit 64 executes various prediction calculations necessary for determining the inventory quantity or the order quantity of the raw material. Specifically, the prediction calculation unit 64 can calculate the total usage amount for each raw material of the predicted article from the article recipe information, and convert the calculated total usage amount into an ordering/receiving unit of the raw material.

Furthermore, the prediction calculation unit 64 refers to the in-house entry/exit information stored in the information storage unit 63 and the past history of the theoretical inventory prediction result of the food manufacturer 3, and executes process of predicting the inventory quantity for each raw material of the food manufacturer 3, based on the exit quantity from the company's warehouse to the food manufacturer 3, that is, the supply quantity to the food manufacturer 3 and the past demand information on the retail store 4, and the previous theoretical inventory prediction result of the food manufacturer 3.

Based on the theoretical inventory prediction of the food manufacturer 3 calculated by the process of the prediction calculation unit 64 and the necessary inventory prediction of the raw materials in the company's warehouse, the order quantity calculation unit 65 determines the holding quantity for each raw material at the company's warehouse, and calculates the order quantity necessary for securing the inventory of the determined holding quantity.

The information generating unit 66 generates order placement information that is to be transmitted to each raw material manufacturer 2, based on the order quantity calculated by the order quantity calculation unit 65. Thereby, when a user on the raw material manufacturer side accesses and then logs in the information management server 34, it is possible to confirm the order contents based on the order placement information generated by the information generating unit 66.

Based on the information indicating the use's operation fed from the input information acquisition unit 61, the display information generating unit 67 generates display information for causing the display unit 52 to display the information stored in the information storage unit 63, information acquired via the network 41, or the results of the executed each piece of process, and outputs the display information to the display unit 52 to display a predetermined display screen.

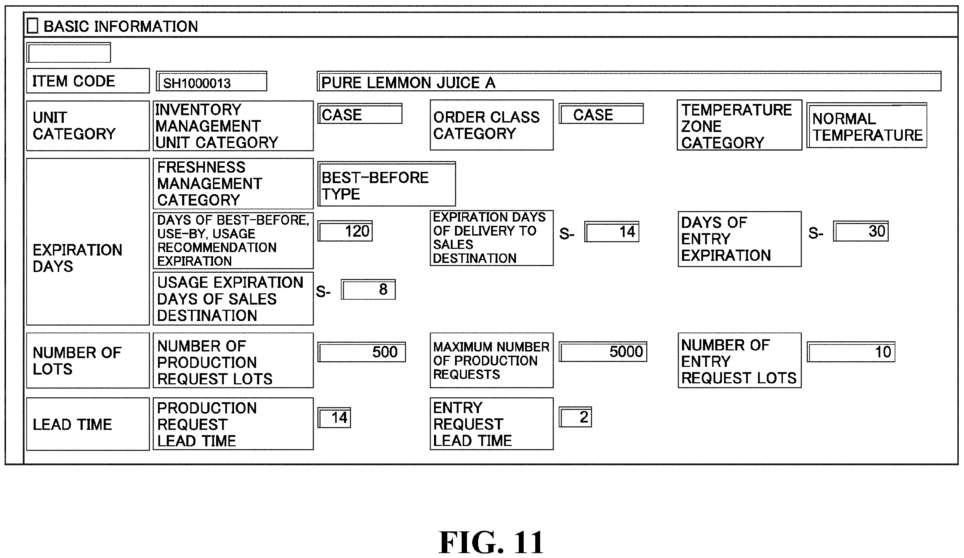

Fig. 11 is an example of the display screen generated by the display information generating unit 67. For example, in a case where the user's operation fed from the input information acquisition unit 61 is an input of a raw material name or a raw material code, and an instruction of displaying the detailed information, based on the information stored in the information storage unit 63 and the information acquired via the network 41,the display information generating unit 67 generates display information such as illustrated in Fig. 11 and outputs the display information to the display unit 52 to be displayed. In addition, in a case where the user's operation fed from the input information acquisition unit 61 is an input of an article name or an article name code, and an instruction of displaying the detailed information, based on the information stored in the information storage unit 63 and the information acquired via the network 41, the display information generating unit 67 generates display information such as illustrated in Fig. 5 and outputs the display information to the display unit 52 to be displayed.

The prediction accuracy verification process unit 68 compares the demand prediction result of the article, the theoretical inventory prediction result of the food manufacturer 3, or the necessary inventory prediction result of the raw material in the company's warehouse stored in the information storage unit 63 with an actual numerical value or the optimum value input by the user and the like, and verifies the prediction accuracy.

Based on the raw material information described with reference to Fig. 4 and the article recipe information described with reference to Fig. 5, the traceability information extraction unit 69 executes process of associating the article sold at the retail store 4 with the raw material and the unprocessed raw material. As a result, in a case where any defect occurs in any articles, raw material, or unprocessed raw materials during the distribution process, it is possible to extract the food manufacturer 3, the retail store 4, or an article to be manufactured that are affected by the defect, a or the raw materials, the unprocessed raw material or the food manufacturer 3 and the like that are considered to be the cause of the defect.

For example, the simulation calculation unit 70 assumes a case where the raw material to be ordered to the raw material manufacturer 2 is replaced with another raw material, and executes process similar to the above-described prediction process to estimate the necessary inventory quantity for each raw material at the company's warehouse. Note that the simulation calculation unit 70 may determine the inventory quantity or calculate the order quantity necessary for securing the determined inventory quantity. Note that in addition to process in a case of switching a raw material, the simulation calculation unit 70 is capable of simulating change of any data (numerical value) related to the necessary inventory quantity prediction, such as sharp increase or decrease in demand (for example, the relevant article is explosively sold due to introduction on a television), change of the usage amount (for example, ingredient increase campaign) and extension of article sales period, and the like.

### (Order Quantity Calculation Process)

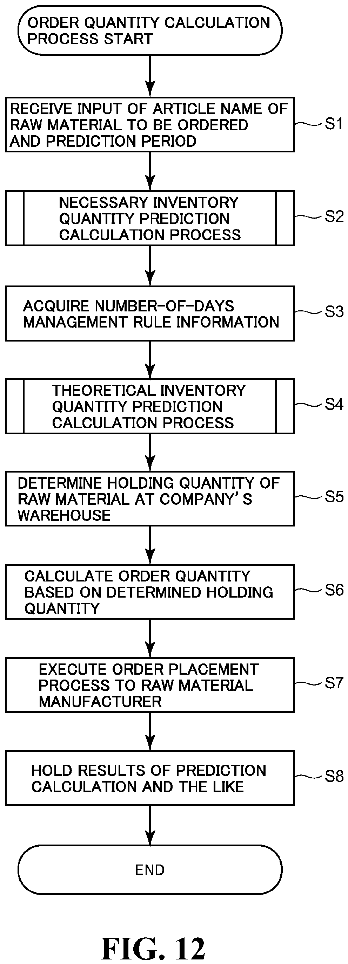

Next, order quantity calculation process to the raw material manufacturer 2 executed by the information management server 34 will be described. Fig. 12 is a flowchart illustrating the order quantity calculation process executed by the information management server 34.

In step S1, the input information acquisition unit 61 accepts an input of the article name of the raw material that is to be ordered and a prediction period. In step S2, the prediction calculation unit 64 calculates the necessary inventory quantity of the raw material under conditions designated in step S1. For example, for the necessary inventory quantity of the raw material, demand prediction for all articles is performed by daily batch process, and by designating the raw material for the demand prediction data, the necessary inventory quantity can be identified. In step S3, the prediction calculation unit 64 acquires the number-of-days management rule information. Note that the number-of-days management rule information referred to here is, for example, information indicating conditions and the like, for example, days from order placement to entry, an order impossible date, or the like set in raw material manufacturer 2 unit. Based on the number-of-days management rule information, it is possible to calculate how many orders are placed to which raw material manufacturer 2. In step S4, the prediction calculation unit 64 calculates the theoretical inventory holding quantity of the food manufacturer 3. In step S5, based on the necessary inventory quantity of the raw material and the theoretical inventory holding quantity of the food manufacturer 3, the prediction calculation unit 64 determines the holding quantity of the raw material at the company's warehouse. In step S6, the order quantity calculation unit 65 determines the order quantity to the raw material manufacturer 2 based on the holding quantity of raw materials at the company's warehouse determined in step S5. In step S7, based on the order quantity obtained by the process of step S6, the information generating unit 66 generates information necessary for order placement process for the raw material manufacturer 2, and executes the order placement process. In step S8, the information storage unit 63 stores the result of the prediction calculation and the like.

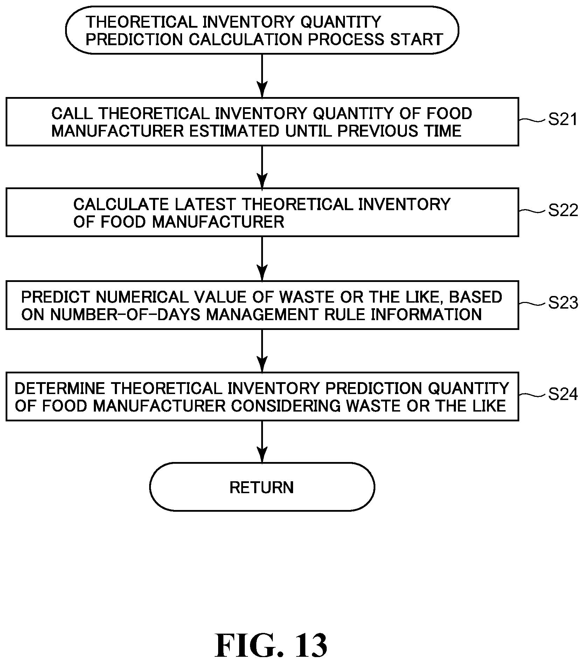

Next, the details of the theoretical inventory calculation process (step S4) in Fig. 12 will be described. Fig. 13 is a flowchart illustrating the process details of calculating the theoretical inventory quantity. In step S21, the previous theoretical inventory quantity of the food manufacturer 3 is called from the information storage unit 63. In step S22, the latest theoretical inventory quantity of the food manufacturer 3 is calculated. Specifically, from the in-house entry/exit information and the past demand information on the article stored in the information storage unit 63, the prediction calculation unit 64 calculates the exit quantity from the company's warehouse to the food manufacturer 3 of the raw material input in step S1 in Fig. 12 , that is, the history of the supply quantity to the food manufacturer 3 and the theoretical usage amount of the raw material at the food manufacturer 3, and calculates the theoretical inventory of the food manufacturer 3 based on the previous theoretical inventory prediction result of the food manufacturer 3 called in step S21. In step S23, a numerical value of waste or the like is predicted based on the number-of-days management rule information. Specifically, based on the number-of-days management rule information stored in the information storage unit 63, the prediction calculation unit 64 predicts the numerical value of waste or the like at a year, month, and date that is to be predicted among the theoretical inventory quantity of the food manufacturer 3. Then, in step S24, the theoretical inventory prediction quantity of the food manufacturer 3 considering the waste or the like is determined. Specifically, the prediction calculation unit 64 subtracts the numerical value of the raw material which is a loss such as the waste calculated in step S23 from the theoretical inventory quantity of the food manufacturer 3 calculated in step S22, and determines the theoretical inventory prediction quantity of the food manufacturer 3 considering the waste or the like, and then the process proceeds to step S5 in Fig. 12.

Through such process, in accordance with the rule for managing the use-by expiration date of the raw material, the information management server 34 can manage the inventory and calculate an appropriate inventory holding quantity and order quantity to execute the order placement process. In addition, through such process, based on the demand prediction of the article, the theoretical inventory prediction of the food manufacturer 3, and the number-of-days management rule, the necessary inventory in the company's warehouse is predicted. Furthermore, such process allows the wholesale company 1 to calculate the theoretical inventory of the raw material manufacturer 2 and the food manufacturer 3, only with numerical values managed by the in-house information management server 34.

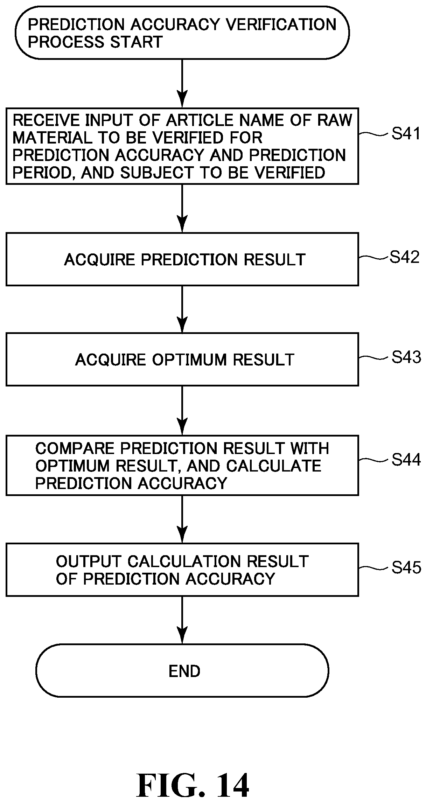

Next, the prediction accuracy verification process executed by the information management server 34 will be described. Fig. 14 is a flowchart illustrating the prediction accuracy verification process executed by the information management server 34.

In step S41, the input information acquisition unit 61 of the information management server 34 receives, from the input unit 51, an input of the article name of the raw material to be verified for the prediction accuracy and the prediction period, and a subject to be predicted (for example, any of the theoretical inventory prediction calculation of the food manufacturer 3, the demand prediction calculation of the article, the demand prediction calculation of the raw material, the calculation of the order prediction quantity from the food manufacturer 3, or the necessary inventory quantity calculation), and feeds the input to the prediction accuracy verification processing unit 68. In step S42, the prediction accuracy verification process unit 68 of the information management server 34 acquires the history of the corresponding prediction result stored in the information storage unit 63.

In step S43, the prediction accuracy verification process unit 68 of the information management server 34 acquires the optimum result for verifying the prediction accuracy. Here, the optimum result may be a numerical value such as the actual inventory quantity or the order quantity, or may be a predetermined value input by the user. In step S44, the prediction accuracy verification process unit 68 of the information management server 34 compares the prediction result with the optimum result, calculates the prediction accuracy, and feeds the prediction accuracy to the display information generating unit 67. Here, the prediction accuracy may be, for example, an error between the prediction result and the optimum result, or may be expressed as percentages of the prediction result when the optimum result is defined as 100%. In step S45, based on the information fed in step S44, the display information generating unit 67 of the information management server 34 generates display screen data for notifying the user of the calculation result of the prediction accuracy, and outputs the display screen data to the display unit 52 to be displayed, and the process is terminated.

Through such process, the prediction accuracy of each prediction calculation performed for ordering is verified.

### (Traceability-based tracking process)

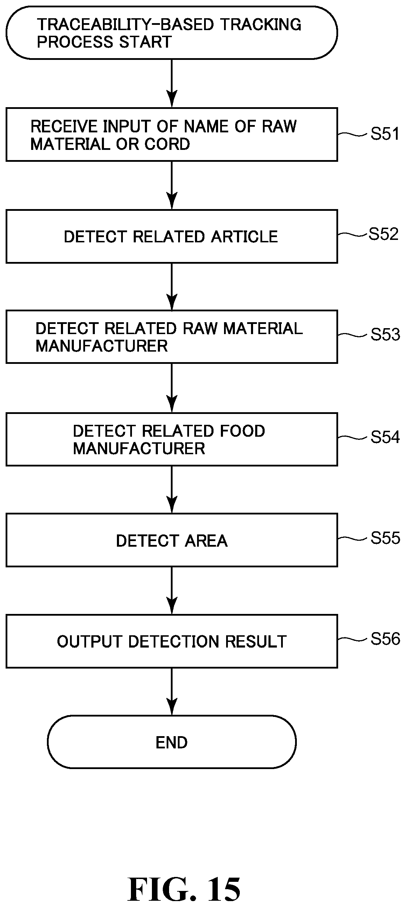

Next, traceability-based tracking process executed by the information management server 34 will be described. Fig. 15 is a flowchart illustrating an example of the traceability-based tracking process executed by the information management server 34.

In step S51, the input information acquisition unit 61 of the information management server 34 receives, from the input unit 51, an input of the name or code of the raw material or the unprocessed raw material, and feeds the input to the traceability information extraction unit 69. In step S52, the traceability information extraction unit 69 of the information management server 34 refers to the article recipe information and the raw material information stored in the information storage unit 63, detects a series of articles related to the name or code of the raw material or the unprocessed raw material that has been input. In step S53, the traceability information extraction unit 69 of the information management server 34 refers to the in-house entry/exit information stored in the information storage unit 63, and detects a raw material manufacturer 2 related to the articles detected in step S52.

In step S54, the traceability information extraction unit 69 of the information management server 34 refers to in-house entry/exit information stored in the information storage unit 63, and detects a food manufacturer 3 related to the articles detected in step S52. In step S55, the traceability information extraction unit 69 of the information management server 34 refers to the article recipe information stored in the information storage unit 63, and detects an area related to the articles detected in step S52. In step S56, the traceability information extraction unit 69 of the information management server 34 feeds the detection results obtained by the process of step S52 to step S55, to the display information generating unit 67. Based on the fed information, the display information generating unit 67 generates data for displaying a display screen, outputs the data to the display unit 52 to be displayed, and the process is terminated.

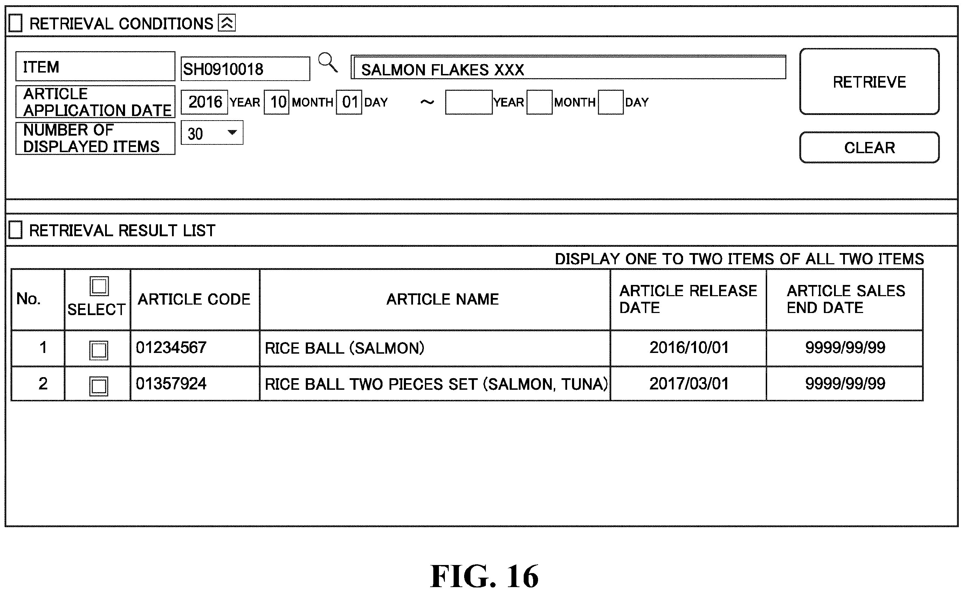

Fig. 16 is an example of a screen displayed by the information management server 34 in step S56. As illustrated in the screen illustrated in Fig. 16, when retrieving with a certain raw material name, an article in which the raw material is used is extracted. In the example illustrated in Fig. 16, when retrieving with the raw material name of the salmon flakes XXX, two articles of rice ball (salmon) and two rice-balls set (salmon, tuna) are extracted and it is understood that the salmon flakes XXX is used in the articles.

As described above, since the article sold at the retail store 4 is memorized being associated with the raw material and the unprocessed raw material, in the process of the article distribution described above, in a case where any defect occurs in any raw materials or unprocessed raw materials, the food manufacturer 3, the retail store 4 that are affected by the defect, the article that is be manufactured, and the like influenced by the defect are extracted.

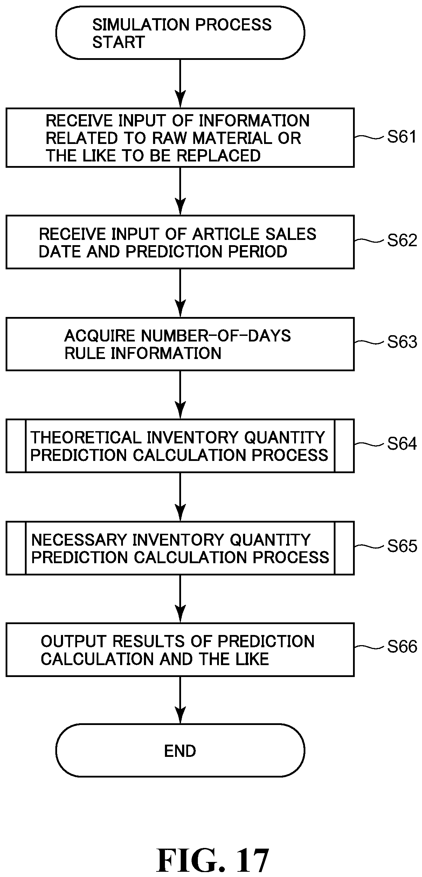

Next, simulation process executed by the information management server 34 will be described. Fig. 17 is a flowchart illustrating an example of the simulation process executed by the information management server 34. The simulation process illustrated in Fig. 17 is for the case of switching the raw material, however, the change of any data (numerical value) related to the necessary inventory quantity prediction, such as the sharp increase or decrease in demand (for example, the relevant article explosively sells due to introduction on a television), the change of usage amount (for example, ingredient increase campaign), the extension of article sales period, and the like can be simulated.

In step S61, the input information acquisition unit 61 of the information management server 34 receives, from the input unit 51, the input of the name or code of the raw material to be replaced, the classification of the article to be replaced, the corresponding the company's warehouse, and other pieces of information on the raw material to be replaced, and feeds the input to the simulation calculation unit 70. In step S62, the input information acquisition unit 61 of the information management server 34 receives, from the input unit 51, an input of an article sales date and a prediction period, and feeds the input to the simulation calculation unit 70. In steps S61 and S62, at this time, the display information generating unit 67 generates display screen data and outputs the display screen data to the display unit 52 to be displayed.

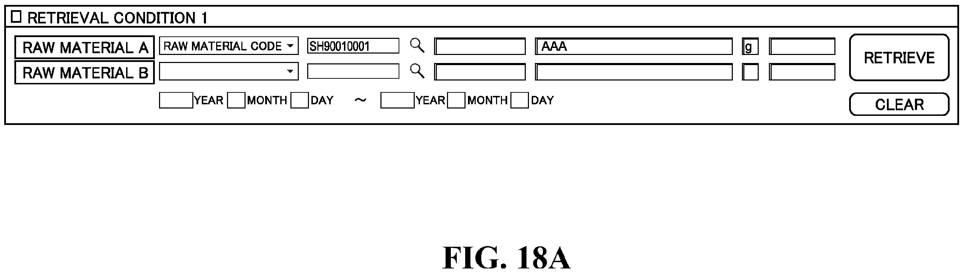

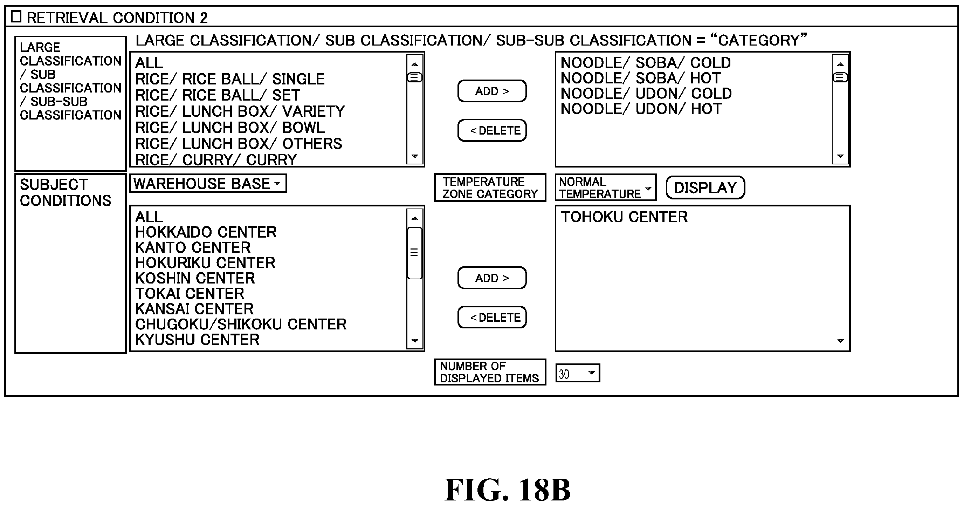

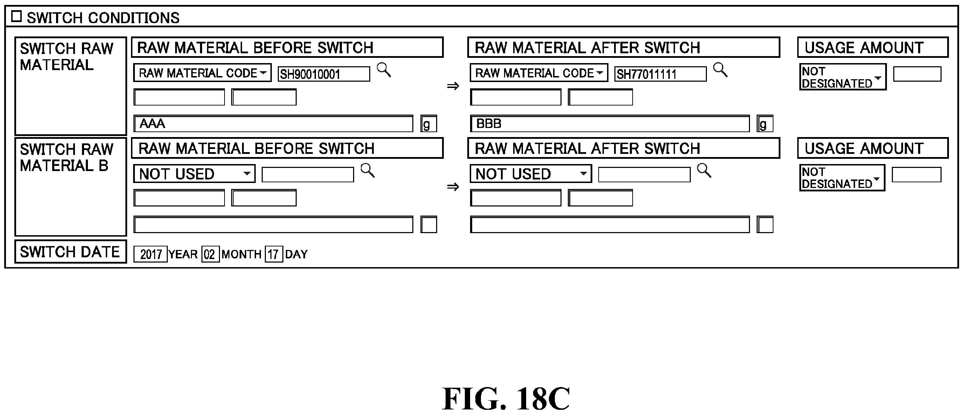

Figs. 18A, 18B, and 18C are examples of the display screen data generated by the display information generating unit 67, and one screen is illustrated by being divided into three. Using the input unit 51, the user inputs various retrieval conditions, and inputs, in a part of a switching conditions, information on a first raw material (described as AAA in Fig. 18C) that is to be replaced and a second raw material (described as BBB in Fig. 18C) that is to be simulated after replacement, and inputs the article sales date and the prediction period in a part of an application condition.

In steps S63 to S66, based on the contents input in steps S61 and S62, the simulation calculation unit 70 of the information management server 34 causes the prediction calculation unit 64 to perform process similar to that in step S2 in Fig. 12, for each of the raw material to be replaced and the raw material to be simulated after replacement, and then feeds the calculation results to the display information generating unit 67.

In step S66, based on the information fed in steps S63 to S65, the display information generating unit 67 of the information management server 34 generates display screen data for notifying the user of the simulation result. The display information generating unit 67 outputs the display screen data of the simulation result according to the user operation input acquired by the input information acquisition unit 61, to the display unit 52 to be displayed, and the process is terminated.

For example, as described with reference to Figs. 18A, 18B, and 18C, a case where simulation is performed will be described, in which the first raw material before replacement is replaced with the second raw material for a raw material to be used for a designated article classification (category), the raw material being shipped from a designated warehouse.

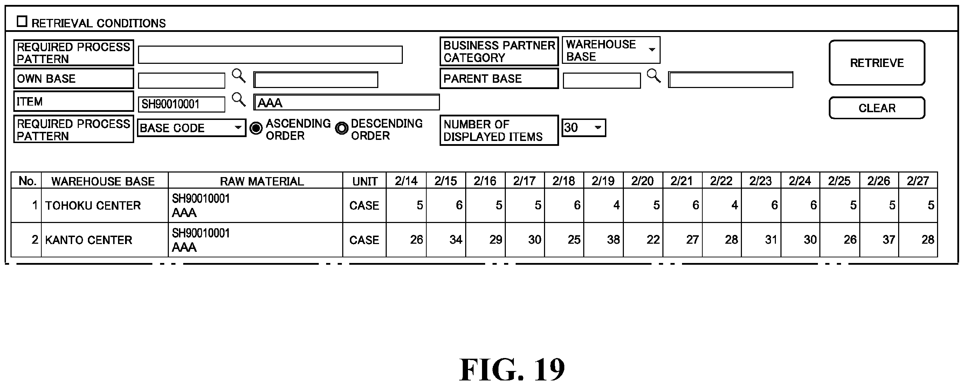

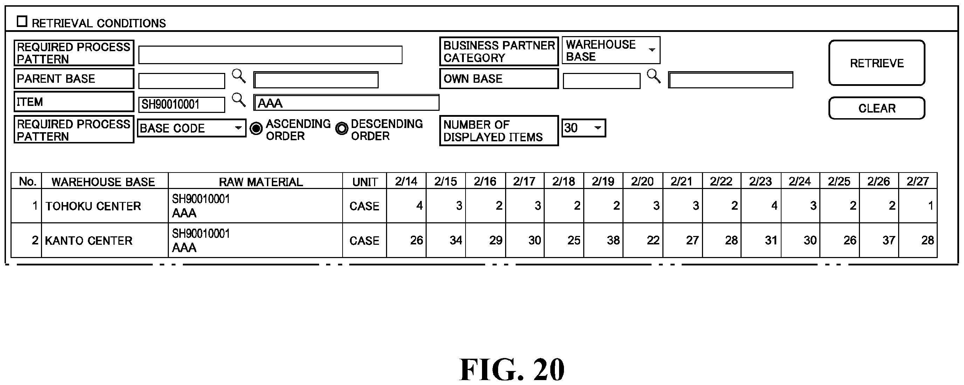

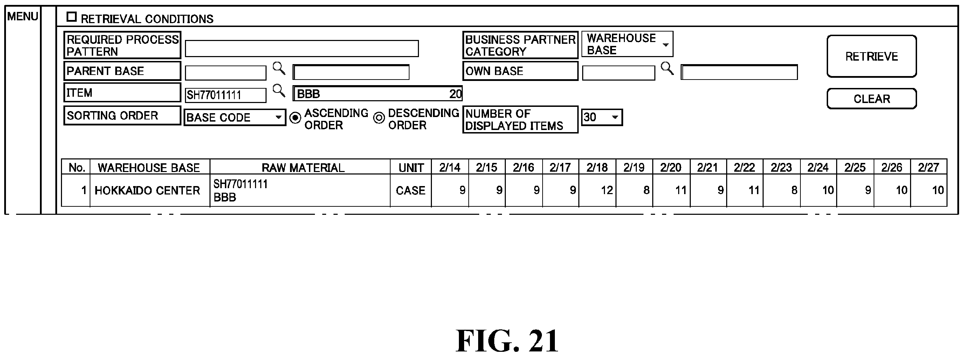

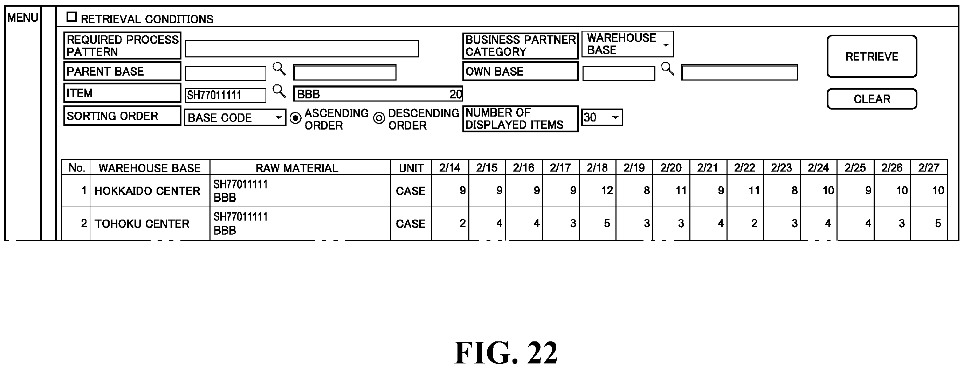

Figs. 19, 20, 21, and 22 are examples of retrieval screens displayed when simulating the replacement of the raw materials. For the necessary inventory quantity of the first raw material before replacement (in Figs. 19 and 20, described as AAA) illustrated in Fig. 19, as illustrated in Fig. 20, the simulation result is output in which only the necessary inventory quantity for the designated warehouse is reduced by the amount used for the designated classification (category). Then, for the necessary inventory quantity of the second raw material before replacement (in Figs. 21 and 22, described as BBB) illustrated in Fig. 21, as illustrated in Fig. 22, the simulation result is output in which the necessary inventory quantity for the designated warehouse is increased by the amount used for the designated category (category).

For example, in a case where the management unit of the first raw material is different from that of the second raw material, the simulation calculation unit 70 of the information management server 34 performs simulation of replacing the raw materials such that the management unit is the smallest integer satisfying the necessary amount of the raw materials. For example, as described with reference to Figs. 18A, 18B, and 18C, in a case where the first raw material before replacement is managed with one case of 25 kg and the second raw material after replacement is managed with one case of 20 kg, the decrease quantity of the first raw material when comparing the necessary inventory quantity illustrated in Fig. 19 with that illustrated in Fig. 20 are not equal to the increase quantity of the second raw material when comparing the order schedule illustrated in Fig. 21 with that illustrated in Fig. 22, and thus the simulation is performed such that the total amount is the closest to the same amount.

Through such process, for example, in the process of the article distribution described above, in a case where any defect occurs in any of raw materials or unprocessed raw materials, or in a case where the expected supply of any raw materials or raw materials decreases or the like, it is possible to quickly arrange a substitute and reduce an influence on the article manufacturing of the food manufacturer 3 and the article sales of the retail store 4.

As described above, the information management server 34 executes the order quantity calculation process illustrated in Fig. 12 to manage the inventory quantity of the raw materials stored in the company's warehouses 11, 12, and 13, and performs the order placement process of the raw material to the raw material manufacturer 2. The information management server 34 is capable of referring to or obtaining order quantity information and sales record information, from the server 33 of the retail store 4. Note that the information management server 34 may access the client terminal 31 of the raw material manufacturer 2 or an external server (not illustrated) to refer to or acquire the information on the unprocessed raw material constituting the raw material as appropriate.

In addition, the information management server 34 receives an input of raw material order placement information from the client terminal 32 of the food manufacturer 3, and performs order receipt process of the article. Note that, the order receipt process of the raw material may not necessarily be transmitted directly from the client terminal 32 of the food manufacturer 3 to the information management server 34, and may be transmitted via a relay server (not illustrated). For example, the order may be placed by using another communication means such as a FAX and then the information may be entered by an operator at the information management server 34 side.

In addition, the information management server 34 can possess and manage information on each raw material for placing an order of the raw material to the raw material manufacturer 2 and supplying the raw material to the food manufacturer 3. Moreover, based on information from the food manufacturer 3, the information management server 34 can perform order receipt process for raw materials and order placement operation for raw materials. Moreover, based on the past sales information provided from the retail store and demand prediction information obtained by predicting from seasons or the like, the information management server 34 can place an order of an appropriate quantity of a raw material to the raw material manufacturer 2. Furthermore, by executing the process illustrated in Fig. 14, the information management server 34 can verify the prediction accuracy of various types of information.

In addition, based on the raw material information provided from the raw material manufacturer 2 and the article recipe information on the food manufacturer 3, the information management server 34 executes the process described with reference to Fig. 15, whereby it is possible to execute the process of associating the article sold in the retail store 4 with the raw material and the unprocessed raw material. Thereby, in the process of the article distribution described with reference to Fig. 1 and Fig. 2, in the case where any defect occurs in any raw materials or unprocessed raw materials, it is possible to extract the raw material manufacturer 2, the food manufacturer 3, and the retail store 4, the article to be manufactured, and the like that are affected by the defect.

In addition, by executing the process described with reference to Figs. 17 to 22, the information management server 34 simulates the case where the raw material to be ordered to the raw material manufacturer 2 is replaced with another raw material, and the like, and can determine the necessary holding quantity for each raw material at the company's warehouse. Note that the information management server 34 may determine the necessary holding quantity for each raw material and calculate the necessary order quantity for securing the inventory of the determined holding quantity.

### (Modification)

The above-described embodiment is merely an example and can be appropriately changed. For example, in the embodiment described above, the theoretical inventory of the food manufacturer 3 is predicted and calculated, but the theoretical inventory of the raw material manufacturer 2 may be predicted and calculated. In that case, the prediction calculation unit 64 can execute process of predicting the inventory quantity for each raw material of the raw material manufacturer 2. For example, by subtracting the entry quantity to the wholesale company 1 from the order quantity to the raw material manufacturer 2, it is possible to calculate the inventory quantity for each raw material of the raw material manufacturer 2. However, unless the information management server 34 is capable of grasping the upstream inventory status of raw materials, such as in a case where the raw material manufacturer 2 produces to make-to-order or in a case where a production schedule and a exit status to another company is appropriately shared, the theoretical inventory cannot be managed correctly. In such a case, therefore, the theoretical inventory quantity of the raw materials in the raw material manufacturer 2 needs to be overwritten with actual inventory information and managed.

### (Theoretical Inventory of Raw Material Manufacturer)

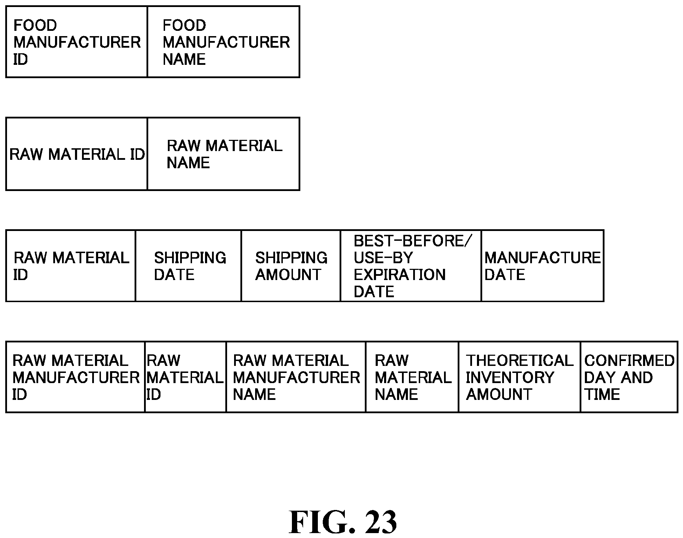

Fig. 23 is a diagram illustrating an example of items of a data table necessary for predicting the theoretical inventory of the raw material manufacturer 2. As illustrated in Fig. 23, for example, the theoretical inventory prediction of the raw material manufacturer 2 is made such that the theoretical inventory amount of a raw material can be grasped by designating a raw material manufacturer ID and the raw material ID. In addition, by designating a future date and time to check, it is also possible to calculate the theoretical inventory amount of the raw material at the designated time point, taking into consideration the quantity of the raw material that expires the best-before/use-by expiration of each raw material at the designated time. In addition, when the raw material manufacturer ID is designated, it is possible to grasp the theoretical inventory amount of the raw material possessed by the raw material manufacturer 2 identified by the raw material manufacturer ID.

### (Method of Calculating Theoretical Inventory Quantity of Raw Material Manufacturer)

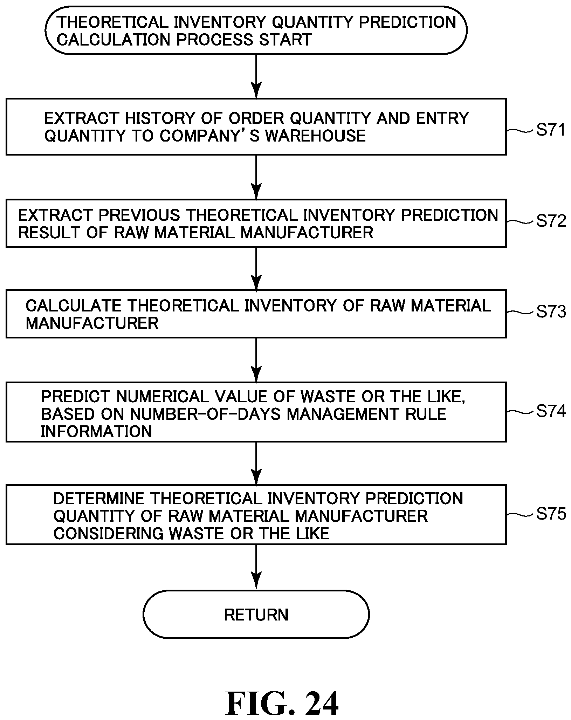

Fig. 24 is a flowchart illustrating a method of calculating the theoretical inventory quantity of the raw material manufacturer 2. In step S71, a history of the order quantity to the raw material manufacturer 2 and a history of the entry quantity from the raw material manufacturer 2 into the company's warehouse are extracted. In step S72, the previous logical inventory prediction result of the raw material manufacturer 2 is extracted. In step S73, the theoretical inventory of the raw material manufacturer 2 is calculated. In step S74, among the calculated theoretical inventory quantity of the raw material manufacturer 2, at a date to be predicted, the numerical value of the raw material that is a loss such as waste due to days taken between order placement and delivery is predicted. In step S75, the prediction calculation unit 64 subtracts the numerical value of the raw material which is the loss such as the waste calculated in step S74 from the theoretical inventory quantity of the raw material manufacturer 2 calculated in step S73, and determines the theoretical inventory prediction quantity of the raw material manufacturer 2 considering the waste or the like.

### (Significance of Managing Theoretical Inventory of Raw Material Manufacturer 2)

The wholesale company 1 grasps the inventory information on the raw material manufacturer 2 as the theoretical inventory in advance, thereby responding promptly and flexibly. For example, in a case where the inventory of the raw material manufacturer 2 is small despite a fact that the demand for a certain raw material is expected to sharply increase, in order to secure an appropriate amount of distribution of the raw material, it is possible to respond by placing an order earlier than usual from wholesale company 1 or making a production request in advance thereto. Alternatively, in a case where there is a schedule of production by the raw material manufacturer 2 despite a fact that the demand for a certain raw material is expected to sharply decrease, it is possible to respond flexibly, such as making the raw material manufacturer 2 stop producing the article, giving an advice on postponement of the production decision, or assisting exploring other selling destinations, or the like.

### (Other Methods of Retrieving Information on Raw Material)

Meanwhile, in the simulations described with reference to Figs. 19, 20, 21, and 22 described above, the example is described in which the name or code of the raw material to be replaced, the classification of the article to be replaced, the corresponding company's warehouse, and other pieces of information on the raw materials to be replaced are designated for execution. In addition to the examples, it is also possible to refer to the article recipe information from the article code to identify the food manufacturer or the raw material, or it is also possible to refer to the master of a business partner, the raw material information, and the entry/exit information to identify a cause lot or an unprocessed raw material. Alternatively, an article to be used may be identified by referring to the raw material information or the article recipe information from the unprocessed raw material, raw material code, and best-before expiration date (manufacture data, lot), or a supply destination having the best-before expiration date may be identified by referring to the entry/exit information.

Alternatively, as a designation method for retrieving the information on the raw materials that is to be replaced, raw materials may be grouped in advance in a predetermined group to perform retrieval based on an identifier (referred to as an item group code) for the grouped raw materials. For example, in a case where a group of raw materials designated by a certain food manufacturer 3 is determined in advance or the like, the item group code enables simulation such as replacement according to the restriction, and thus it is possible to reflect detailed restrictions on business relations that are difficult to be dealt with only an ordinary raw material code or a raw material name.

In addition, the series of process described above can be executed by hardware or software. When the series of process is executed by software, from a computer program storage medium, the computer program constituting the software is installed in a computer built in dedicated hardware, or, for example, a versatile personal computer or the like that are capable of executing various functions by installing various computer program. Note that the computer program executed by the computer may be a computer program in which process is performed in chronological order according to the order described in this specification, or may be a computer program in which process is performed at a necessary timing, in parallel or when a call is made or the like. Furthermore, the embodiment of the present invention is not limited to the above-described embodiment, and various modifications can be made without departing from the gist of the present invention. For example, although food is exemplified as the article handled in the above-mentioned embodiment example, it is also applicable to products other than food.

### {Reference Signs List}

1 WHOLESALE COMPANY
2 RAW MATERIAL MANUFACTURER
3 FOOD MANUFACTURER (AN EXAMPLE OF ARTICLE MANUFACTURER)
4 RETAIL STORE
11 to 13 WAREHOUSE
31, 32 CLIENT TERMINAL
33 SERVER OF RETAIL STORE
34 INFORMATION MANAGEMENT SERVER
41 NETWORK
61 INPUT INFORMATION ACQUISITION UNIT
62 TRANSMITTING/RECEIVING PROCESS UNIT
63 INFORMATION STORAGE UNIT (AN EXAMPLE OF INFORMATION STORAGE MEANS)
64 PREDICTION CALCULATION UNIT (AN EXAMPLE OF PREDICTION CALCULATION MEANS)
65 ORDER QUANTITY CALCULATION UNIT (AN EXAMPLE OF ORDER QUANTITY CALCULATION MEANS)
66 INFORMATION GENERATING UNIT
67 DISPLAY INFORMATION GENERATING UNIT (AN EXAMPLE OF DISPLAY CONTROL MEANS)
68 PREDICTION ACCURACY VERIFICATION PROCESS UNIT (AN EXAMPLE OF PREDICTION ACCURACY VERIFICATION MEANS)
69 TRACEABILITY INFORMATION EXTRACTION UNIT (AN EXAMPLE OF RELATED INFORMATION EXTRACTION MEANS)
70 SIMULATION CALCULATION UNIT (AN EXAMPLE OF SIMULATION CALCULATION MEANS)

## Claims

1. An inventory management and ordering apparatus comprising:
information storage means that stores past demand information on an article sold at a retail store, history information on order placement to a raw material manufacturer selling a raw material for manufacturing the article and history information on entry to a company's warehouse, history information on order receipt of the raw material from an article manufacturer manufacturing the article and supply history information, expiration date information on entry to the company's warehouse calculated by a best-before expiration date or a use-by expiration date of the raw material and a number of days until the expiration date, expiration date information on delivery to the article manufacturer, information on an in-house inventory quantity of the raw material, recipe information of the article, and number-of-days management rule information indicating a management rule of a usage expiration date of the raw material at the article manufacturer;
prediction calculation means that, based on the information stored in the information storage means, predicts a future demand of the article and theoretical inventory for the each raw material of the article manufacturer, and calculates a necessary inventory quantity of the raw material in the company's warehouse from the theoretical inventory; and
order quantity calculation means that, based on the necessary inventory quantity of the raw material, determines a holding quantity for each raw material at the company's warehouse, and calculates an order quantity necessary for securing the determined holding quantity.

2. The inventory management and ordering apparatus according to claim 1,
wherein the information storage means further stores calculation result by the prediction calculation means and the order quantity calculation means, and
the inventory management and ordering apparatus includes prediction accuracy verification means that verifies prediction accuracy by comparing the calculation result with an actual inventory quantity at the article manufacturer or an optimum value input by a user.

3. The inventory management and ordering apparatus according to claim 1 or 2, comprising:
related information extraction means that, based on information on an unprocessed raw material constituting the raw material and the article recipe information, extracts any of a related article, the raw material manufacturer, the article manufacturer, or the retail store.

4. The inventory management and ordering apparatus according to any one of claims 1 to 3, comprising:
display control means that controls display of information on a display unit; and
simulation calculation means that receives designation of replacement of the raw material ordered to the raw material manufacturer with another raw material, controls, by the prediction calculation means, a calculation of the future demand prediction of the article corresponding to the other raw material, the theoretical inventory of the raw material manufacturer, the theoretical inventory of the article manufacturer, and the necessary inventory prediction of the raw material in the company's warehouse, controls, by the order quantity calculation means, the calculation of the holding quantity for the each raw material at the company's warehouse corresponding to the other raw material and the order quantity, and outputs a prediction result and a calculation result corresponding to the other raw material to the display control means to display the results on the display unit.

5. An inventory management and ordering method executed by an inventory management and ordering apparatus including information storage means; prediction calculation means; and order quantity calculation means, the method comprising:
an information storing step in which the information storage means stores past demand information on an article sold at a retail store, history information on order placement to a raw material manufacturer selling a raw material for manufacturing the article and history information on entry to a company's warehouse, history information on order receipt of the raw material from an article manufacturer manufacturing the article and supply history information, expiration date information on entry to the company's warehouse calculated by a best-before expiration date or a use-by expiration date of the raw material and a number of days until the expiration date, expiration date information on delivery to the article manufacturer, information on an in-house inventory quantity of the raw material, recipe information of the article, and number-of-days management rule information indicating a management rule of a usage expiration date of the raw material at the article manufacturer;
a prediction calculation step in which, based on the information stored in the information storage means, the prediction calculation means predicts a future demand of the article and theoretical inventory for the each raw material, and theoretical inventory for the each raw material of the article manufacturer, and calculates a necessary quantity of the raw material in the company's warehouse from the theoretical inventory; and
an order quantity calculation step in which, based on the necessary inventory quantity of the raw material in the company's warehouse predicted by the process of the prediction calculation means, the order quantity calculation means determines a holding quantity for each raw material at the company's warehouse, and calculates an order quantity necessary for securing the determined holding quantity.

6. A computer program for causing a computer to function as an inventory management and ordering apparatus that executes management of an inventory in a company's warehouse and order placement operation, in a case of supplying a raw material ordered to a raw material manufacturer to an article manufacturer manufacturing an article sold at a retail store, the computer program being for causing the apparatus to function as:
information storage means that stores past demand information on an article sold at the retail store, history information on order placement to a raw material manufacturer selling a raw material for manufacturing the article and history information on entry to a company's warehouse, history information on order receipt of the raw material from an article manufacturer manufacturing the article and supply history information, expiration date information on entry to the company's warehouse calculated by a best-before expiration date or a use-by expiration date of the raw material and a number of days until the expiration date, expiration date information on delivery to the article manufacturer, information on an in-house inventory quantity of the raw material, recipe information of the article, and number-of-days management rule information indicating a management rule of a usage expiration date of the raw material at the article manufacturer;
prediction calculation means that, based on the information stored in the information storage means, predicts a future demand of the article and theoretical inventory for the each raw material of the article manufacturer, and calculates a necessary quantity of the raw material in the company's warehouse from the theoretical inventory; and
order quantity calculation means that, based on the necessary inventory quantity of the raw material in the company's warehouse predicted by the process of the prediction calculation means, determines a holding quantity for each raw material at the company's warehouse, and calculates an order quantity necessary for securing the determined holding quantity.
